# EUROPEAN PATENT APPLICATION

(11) **EP 4 823 128 A1**
(43) Date of publication of application: **14.10.2026**
(21) Application number: 23960454.9
(22) Date of filing: 05.12.2023
(51) Int. Cl.: H04W 4/20

(54) **COMMUNICATION METHOD AND APPARATUS, AND STORAGE MEDIUM**

(71) Applicant: Beijing Xiaomi Mobile Software Co., Ltd., Beijing 100085 (CN)
(72) Inventor: ZHAO, Qun, Beijing 100085 (CN)
(74) Representative: Stöckeler, Ferdinand
(86) International application number: PCT/CN2023/136442
(87) International publication number: WO 2025/118139

(57) **Abstract**

The present disclosure relates to a communication method and apparatus, and a storage medium. The method comprises: receiving first signaling sent by a second device, wherein the first signaling comprises first information, the first information being information related to the total number of time units in a time unit set, and the first signaling is used for instructing a first device to determine a first random number and a first serial number, the first serial number being the serial number of a time unit for sending the first random number. In the present disclosure, receiving first signaling sent by a second device to determine the serial number of a time unit for sending a first random number reduces the probability of a collision occurring when a plurality of first devices simultaneously send their own first random numbers, and improves the efficiency of inventorying the first devices.

## Description

### TECHNICAL FIELD

The disclosure relates to the field of communication technology, and specifically to a communication method, an apparatus and a storage medium.

### BACKGROUND

In the design of ambient IoT, it is required to support non-activated devices. Such non-activated devices have no radio frequency transmission capability, and need to acquire transmission energy by means of backscattering. In the 3GPP design, the method for non-activated devices to support inventory needs further improvement.

### SUMMARY

Embodiments of the disclosure provide a communication method, an apparatus and a storage medium.

According to a first aspect of the embodiments of the disclosure, a communication method is provided, which is performed by a first device. The communication method includes:
receiving a first signaling sent by a second device,
in which the first signaling includes first information, the first information is information related to a total quantity of time units in a time unit set, the first signaling is configured to instruct the first device to determine a first random number and a first sequence number, and the first sequence number is a sequence number of a time unit for sending the first random number.

According to a second aspect of the embodiments of the disclosure, a communication method is provided, which is performed by a second device. The communication method includes:
sending a first signaling to a first device,
in which the first signaling includes first information, the first information is information related to a total quantity of time units in a time unit set, the first signaling is configured to instruct the first device to determine a first random number and a first sequence number, and the first sequence number is a sequence number of a time unit for sending the first random number.

According to a third aspect of the embodiments of the disclosure, a first device is provided, including:
a transceiver module, configured to receive a first signaling sent by a network device,
in which the first signaling includes first information, the first information is information related to a total quantity of time units in a time unit set, the first signaling is configured to instruct the first device to determine a first random number and a first sequence number, and the first sequence number is a sequence number of a time unit for sending the first random number.

According to a fourth aspect of the embodiments of the disclosure, a second device is provided, including:
a transceiver module, configured to send a first signaling to at least one terminal device,
in which the first signaling includes first information, the first information is information related to a total quantity of time units in a time unit set, the first signaling is configured to instruct the first device to determine a first random number and a first sequence number, and the first sequence number is a sequence number of a time unit for sending the first random number.

According to a fifth aspect of the embodiments of the disclosure, a first device is provided, including:
one or more processors,
in which the first device is configured to execute the communication method in the embodiments of the first aspect.

According to a sixth aspect of the embodiments of the disclosure, a second device is provided, including:
one or more processors,
in which the second device is configured to execute the communication method in the embodiments of the second aspect.

According to a seventh aspect of the embodiments of the disclosure, a communication system is provided, which may include: a first device and a second device; in which the first device is configured to implement the communication method in the embodiments of the first aspect, and the second device is configured to implement the communication method in the embodiments of the second aspect.

According to an eighth aspect of the embodiments of the disclosure, a storage medium is provided. When instructions run on a communication device, the communication device executes the communication method in the embodiments of the disclosure.

### BRIEF DESCRIPTION OF THE DRAWINGS

For a clearer description of the technical solutions in the embodiments of the disclosure, the accompanying drawings required for describing the embodiments are introduced below. The following drawings merely illustrate some embodiments of the disclosure and do not constitute a specific limitation on the protection scope of the disclosure.
FIG. 1A is a schematic architectural diagram of a communication system according to an embodiment of the disclosure.
FIG. 1B is a schematic diagram of a tag state according to an embodiment of the disclosure.
FIG. 1C is a schematic diagram of an inventory process according to an embodiment of the disclosure.
FIG. 2A is an interaction schematic diagram of a communication method according to an embodiment of the disclosure.
FIG. 2B is a working schematic diagram of a communication method according to an embodiment of the disclosure.
FIG. 2C is a working schematic diagram of a communication method according to an embodiment of the disclosure.
FIG. 2D is a working schematic diagram of a communication method according to an embodiment of the disclosure.
FIG. 3 is a flow schematic diagram of a communication method according to an embodiment of the disclosure.
FIG. 4 is a flow schematic diagram of a communication method according to an embodiment of the disclosure.
FIG. 5 is an interaction schematic diagram of a communication method according to an embodiment of the disclosure.
FIG. 6A is a structural schematic diagram of a first device according to an embodiment of the disclosure.
FIG. 6B is a structural schematic diagram of a second device according to an embodiment of the disclosure.
FIG. 7A is a structural schematic diagram of a communication device according to an embodiment of the disclosure.
FIG. 7B is a structural schematic diagram of a chip according to an embodiment of the disclosure.

### DETAILED DESCRIPTION

Embodiments of the disclosure provide a communication method, an apparatus and a storage medium.

According to a first aspect of the embodiments of the disclosure, a communication method is provided, which is performed by a first device. The communication method includes:
receiving a first signaling sent by a second device, in which the first signaling includes first information,
the first information is information related to a total quantity of time units in a time unit set, a time unit includes at least one time slot,
the first signaling is configured to instruct the first device to determine a first random number and a first sequence number, and the first sequence number is a sequence number of a time unit for sending the first random number.

In the above embodiments, the first random number and the first sequence number are determined via the first signaling. In this way, the sequence number of the time unit for sending the first random number may be determined according to the first sequence number, which may avoid transmission collision when a plurality of first devices send their respective first random numbers, thus improving a transmission success rate of the first random number.

In conjunction with some embodiments of the first aspect, in some embodiments, the first signaling further includes second information,
the first signaling is further configured to instruct the first device to determine a threshold according to at least one of the first information or the second information, the threshold refers to a number of times a second signaling needs to be received before sending the first random number to the second device, and
the second signaling is configured to instruct the first device to enter a next sending occasion.

In the above embodiments, the first signaling is further configured to instruct the first device to determine the threshold, a number of times the second signaling needs to be received before sending the first random number to the second device, based on at least one of the first information or the second information. Accordingly, the first device may determine the number of times the second signaling needs to be received before sending the first random number according to the threshold, and further determine a transmission timing of the first random number.

In conjunction with some embodiments of the first aspect, in some embodiments, the method further includes:
determining the first random number;
determining the first sequence number according to the first information and the second information;
receiving the second signaling sent by the second device until the number of times the second signaling is received reaches the threshold;
sending the first random number to the second device in a first time unit, in which the first time unit is a time unit corresponding to the first sequence number in the time unit set; and
receiving a response message sent by the second device, in which the response message indicates that at least one first device accesses a channel successfully.

In the above embodiments, the first random number is sent to the second device in the first time unit, and the sequence number of the first time unit is associated with the first sequence number. Accordingly, the first device may send the first random number to the second device within the first time unit, so as to avoid a collision caused by simultaneous transmission of the first random numbers from different first devices.

In conjunction with some embodiments of the first aspect, in some embodiments, the second signaling includes an index value related to a total quantity of repeated transmissions of the second signaling,
the first time unit is a time unit corresponding to the first sequence number in a first time unit subset, the time unit set includes the first time unit subset, and the first time unit subset has a mapping relationship with the index value.

In the above embodiments, the first device preconfigures a mapping relationship between index values and time unit subsets, and determines the first time unit according to the index value carried by the second signaling. The first time unit is the time unit corresponding to the first sequence number in the first time unit subset, and the first time unit subset is a time unit subset having a mapping relationship with the index value. In this way, the first device may determine the time unit subset for sending the first random number based on the mapping relationship, then determine the first time unit for sending the first random number within the time unit subset, so as to improve the transmission success rate of the first random number.

In conjunction with some embodiments of the first aspect, in some embodiments, a channel for sending the first random number has a mapping relationship with the index value.

In the above embodiments, the channel for sending the first random number has the mapping relationship with the index value. Accordingly, the first device may send the first random number on the corresponding channel, so as to reduce the collision generated when different first devices simultaneously transmit their respective first random numbers.

In conjunction with some embodiments of the first aspect, in some embodiments, the method further includes:
determining a second sequence number according to the first signaling, in which the second sequence number is a sequence number of a time unit among time units for sending the first random number;
determining a quantity of first time units;
determining a third sequence number according to the second sequence number and the quantity of the first time units, in which the third sequence number is a sequence number of an initial time unit for the first device to send the first random number to the second device; and
determining the first sequence number according to the third sequence number and the quantity of the first time units.

In the above embodiments, the third sequence number is determined according to the second sequence number and the quantity of time units for sending the first random number. The third sequence number refers to the sequence number of the initial time unit for the first device to send the first random number to the second device. In this way, the sequence number of the initial time unit for sending the first random number may be determined based on the second sequence number and the quantity of time units for sending the first random number.

In conjunction with some embodiments of the first aspect, in some embodiments, the first information is the total quantity of time units or a value obtained by raising 2 to the power of the total quantity of time units, and the second information is a quality factor (Q) value; or the first information is the total quantity of time units, and the second information is a product of the total quantity of time units and the Q value.

In the above embodiments, various relationships satisfied by the first information and the second information are determined. In this way, a plurality of possible conditions of the first information and the second information may be provided, which enables the first device to determine the first sequence number of the time unit for sending the first random number more flexibly.

In conjunction with some embodiments of the first aspect, in some embodiments, the first signaling further includes third information, and the third information indicates at least one of:
an uplink channel or a sidelink channel;
a data rate and a modulation format transmitted on an uplink or a sidelink; or
whether a pilot transmitted on an uplink or a sidelink is an extended pilot.

In the above embodiments, the first signaling further includes the third information. In this way, the first device may determine the first sequence number according to the received third information, which enhances the flexibility for the first device to determine the first sequence number.

In conjunction with some embodiments of the first aspect, in some embodiments, the quantity of the first time units is determined according to at least one of:
the quantity of first time units indicated by the second device;
a self-capability of the first device; or
a coverage level of the first device.

In the above embodiments, the quantity of time units for sending the first random number is determined based on at least one of the quantity of time units for sending the first random number indicated by the second device, the self-capability of the first device, or the coverage level of the first device. In this way, a plurality of scenarios for determining the quantity of time units for sending the first random number indicated by the second device may be provided.

In conjunction with some embodiments of the first aspect, in some embodiments, the first information is the total quantity of time units or the value obtained by raising 2 to the power of the total quantity of time units, and the second information is the Q value,
in which determining the second sequence number according to the first signaling includes:
determining a third random number according to the first information, in which a value range of the third random number is determined by the quantity of the first time units and the first information; and
taking the third random number as the second sequence number;
the method further includes:
determining a second random number according to the second information, and taking the second random number as the threshold.

In the above embodiments, the second random number is determined according to the Q value and serves as the threshold. The third random number is determined according to the second information and serves as the second sequence number. In this way, different threshold values and second sequence numbers are obtained by respective first devices, which avoids an occurrence of the transmission collision when a plurality of first devices simultaneously send the first random numbers and improves the success rate of the first device in sending the first random number.

In conjunction with some embodiments of the first aspect, in some embodiments, the first information is the total quantity of time units, and the second information is the product of the total quantity of time units and the Q value,
in which determining the second sequence number according to the first signaling includes:
taking a quotient of the first information and the quantity of the first time units as a first result;
determining a fourth random number according to the second information; and
taking a result obtained by performing a modulo operation on the fourth random number and the first result as the second sequence number.

In the above embodiments, the fourth random number is determined according to the second information, and the first result is determined based on the quotient of the first information and the quantity of first time units. The result obtained by performing the modulo operation on the fourth random number and the first result is taken as the second sequence number. In this way, each first device acquires a different second sequence number, which avoids an occurrence of the transmission collision when a plurality of first devices simultaneously send the first random numbers and improves the success rate of the first device in sending the first random number.

In conjunction with some embodiments of the first aspect, in some embodiments, the method further includes:
taking a quotient of the fourth random number and the first result as the threshold.

In the above embodiments, the quotient of the fourth random number and the first result is taken as the threshold. In this way, each first device determines a different threshold, which avoids an occurrence of the transmission collision when a plurality of first devices simultaneously send the first random numbers and improves the success rate of the first device in sending the first random number.

In conjunction with some embodiments of the first aspect, in some embodiments, the first information is the total quantity of time units, and the second information is the Q value,
in which determining the second sequence number according to the first signaling includes:
determining the second sequence number according to the first information and the third information.

In the above embodiments, a fifth random number is generated according to the Q value, and the second sequence number is determined according to the third information and the total quantity of time units. In this way, each first device obtains a different second sequence number, which avoids an occurrence of the transmission collision when a plurality of first devices simultaneously send the first random numbers and improves the success rate of the first device in sending the first random number.

In conjunction with some embodiments of the first aspect, in some embodiments, the method further includes: generating a fifth random number according to the second information, and taking the fifth random number as the threshold.

In the above embodiments, the fifth random number is generated according to the second information and taken as the threshold. In this way, each first device acquires a different second sequence number, which avoids an occurrence of the transmission collision when a plurality of first devices simultaneously send the first random numbers and improves the success rate of the first device in sending the first random number.

According to a second aspect of the embodiments of the disclosure, a communication method is provided, which is performed by a second device. The communication method includes:
sending a first signaling to a first device, in which the first signaling includes first information,
the first information is information related to a total quantity of time units in a time unit set,
the first signaling is configured to instruct the first device to determine a first random number and a first sequence number, and the first sequence number is a sequence number of a time unit for sending the first random number.

In the above embodiments, the first random number and the first sequence number are determined via the first signaling. In this way, the sequence number of the time unit for sending the first random number may be determined according to the first sequence number, which may avoid transmission collision when a plurality of first devices send their respective first random numbers, thus improving a transmission success rate of the first random number.

In conjunction with some embodiments of the second aspect, in some embodiments, the method further includes: after sending the first signaling to at least one first device,
sending a second signaling to the at least one first device at least once;
receiving the first random number sent by the at least one first device, and sending a response message to the at least one first device,
in which the response message indicates that at least one first device successfully accesses a channel.

In the above embodiments, the first signaling is further configured to instruct the first device to determine the threshold, a number of times the second signaling needs to be received before sending the first random number to the second device, based on at least one of the first information or the second information. Accordingly, the first device may determine the number of times the second signaling needs to be received before sending the first random number according to the threshold, and further determine a transmission timing of the first random number.

In conjunction with some embodiments of the second aspect, in some embodiments, the method further includes: after sending the first signaling to at least one first device,
sending a second signaling to the at least one first device at least once;
receiving the first random number sent by the at least one first device, and sending a response message to the at least one first device,
in which the response message indicates that at least one first device successfully accesses a channel.

In the above embodiments, by sending the second signaling to the first device at least once, the number of second signaling received by the first device reaches the threshold, so that the first device transmits the first random number to the second device. In this way, the first device may be inventoried according to the first random number sent by the first device.

In conjunction with some embodiments of the second aspect, in some embodiments, the first information is the total quantity of time units or a value obtained by raising 2 to the power of the total quantity of time units, and the second information is a Q value; or
the first information is the total quantity of time units, and the second information is a product of the total quantity of time units and the Q value.

In the above embodiments, various relationships satisfied by the first information and the second information are determined. In this way, a plurality of possible conditions of the first information and the second information may be provided, which enables the first device to determine the first sequence number of the time unit for sending the first random number more flexibly.

In conjunction with some embodiments of the second aspect, in some embodiments, the first signaling further includes third information, and the third information indicates at least one of:
an uplink channel or a sidelink channel;
a data rate and a modulation format transmitted on an uplink or a sidelink; or
whether a pilot transmitted on an uplink or a sidelink is an extended pilot.

In the above embodiments, the first signaling further includes the third information. In this way, the first device may determine the first sequence number according to the received third information, which enhances the flexibility for the first device to determine the first sequence number.

In conjunction with some embodiments of the second aspect, in some embodiments, the second signaling includes an index value related to a total quantity of repeated transmissions of the second signaling.

In the above embodiments, the second signaling sent by the second device to the first device further includes the index value, and the index value is associated with the total quantity of times of repeated transmission of the second signaling. In this way, the first device may determine at least one of a time unit subset or a channel subset for sending the first random number according to the index value, and improve the success rate of the first device in sending the first random number.

In conjunction with some embodiments of the second aspect, in some embodiments, the total quantity of time units is predefined by a protocol or determined by a configuration of the second device.

In the above embodiments, the total quantity of time units is predefined by the protocol or determined by the configuration of the second device. In this way, the total quantity of time units may be sent to the first device via the first signaling, enabling the first device to determine the first time unit for sending the first random number based on the total quantity of time units.

In conjunction with some embodiments of the second aspect, in some embodiments, a first start time when the second device receives the first random number from an initial first device is later than a first end time when the second device sends the first signaling to a last first device, and a difference between the first start time and the first end time is not less than a first threshold; and
a second end time when the second device receives the first random number from the last first device is earlier than a second start time when the second device sends the response message to the initial first device, and a difference between the second end time and the second start time is not less than a second threshold.

In the above embodiments, the first start time when the second device receives the first random number from the initial first device is later than the first end time when the second device sends the first signaling to the last first device, and the difference between the first start time and the first end time is not less than a first threshold; and the second end time when the second device receives the first random number from the last first device is earlier than a second start time when the second device sends the response message to the initial first device, and the difference between the second end time and the second start time is not less than a second threshold. In this way, there are time intervals between the second device sending the second signaling, receiving the first random number and sending the response message, which reduces a load of the second device.

According to a third aspect of the embodiments of the disclosure, a first device is provided, including:
a transceiver module, configured to receive a first signaling sent by a network device,
in which the first signaling includes first information, the first information is information related to a total quantity of time units in a time unit set,
the first signaling is configured to instruct the first device to determine a first random number and a first sequence number, and the first sequence number is a sequence number of a time unit for sending the first random number.

According to a fourth aspect of the embodiments of the disclosure, a second device is provided, including:
a transceiver module, configured to send a first signaling to at least one terminal device,
in which the first signaling includes first information, the first information is information related to a total quantity of time units in a time unit set,
the first signaling is configured to instruct the first device to determine a first random number and a first sequence number, and the first sequence number is a sequence number of a time unit for sending the first random number.

According to a fifth aspect of the embodiments of the disclosure, a first device is provided, including:
one or more processors,
in which the first device is configured to execute the communication method in the embodiments of the first aspect.

According to a sixth aspect of the embodiments of the disclosure, a second device is provided, including:
one or more processors,
in which the second device is configured to execute the communication method in the embodiments of the second aspect.

According to a seventh aspect of the embodiments of the disclosure, a communication system is provided, which may include: a first device and a second device; in which the first device is configured to implement the communication method in the embodiments of the first aspect, and the second device is configured to implement the communication method in the embodiments of the second aspect.

According to an eighth aspect of the embodiments of the disclosure, a storage medium is provided, which stores instructions that, when run on a communication device, cause the communication device to perform the communication method as described in the embodiments of the first aspect or the second aspect.

According to a ninth aspect of the embodiments of the disclosure, a program product is provided, which, when executed by a communication device, causes the communication device to perform the method as described in the optional implementations of the first aspect or the second aspect.

According to a tenth aspect of the embodiments of the disclosure, a computer program is provided, which, when run on a computer, causes the computer to perform the method as described in the optional implementations of the first aspect or the second aspect.

According to an eleventh aspect of the embodiments of the disclosure, a chip or a chip system is provided. The chip or chip system includes a processing circuit configured to perform the method as described in the optional implementations of the first aspect or the second aspect.

The foregoing first device, second device, communication system, storage medium, program product, computer program, chip or chip system are all configured to execute the methods proposed in the embodiments of the disclosure. Therefore, for the beneficial effects that can be achieved thereby, reference may be made to the beneficial effects in the corresponding method, which are not repeated here.

Embodiments of the disclosure provide a communication method, an apparatus and a storage medium. In some embodiments, terms including communication method, signal transmission method and radio frame transmission method are interchangeable, and terms including information processing system and communication system are also interchangeable.

Embodiments of the disclosure are not exhaustive but merely illustrative of some embodiments, and shall not serve as specific limitations on the protection scope of the disclosure. Without conflict, each step in a certain embodiment may be implemented as an independent embodiment, and the steps may be combined arbitrarily. For example, the solution after removing some steps in a certain embodiment may also be implemented as an independent embodiment, and the order of the steps in a certain embodiment may be swapped arbitrarily. In addition, implementations in a certain embodiment may be combined arbitrarily; furthermore, the embodiments may be combined arbitrarily. For example, some or all steps of different embodiments may be combined arbitrarily, and a certain embodiment may be combined arbitrarily with implementations of other embodiments.

In embodiments of the disclosure, unless otherwise specified and without logical conflict, the terms and/or descriptions between the embodiments are consistent and may be cross-referenced. Technical features in different embodiments may be combined to form new embodiments according to their inherent logical relationships.

The terms used in the embodiments of the disclosure are merely for the purpose of describing specific embodiments and are not intended to limit the disclosure.

In the embodiments of the disclosure, "a plurality of" refers to two or more.

In some embodiments, terms such as "at least one (of)", "one or more", "a plurality of", and "multiple" may be used interchangeably.

In some embodiments, recitations such as "at least one of A, B", "A and/or B", "A in one case and B in another case", "A in response to one case and B in response to another case" may include the following technical solutions as appropriate: in some embodiments, A (performing A independently of B); in some embodiments, B (performing B independently of A); in some embodiments, selectively performing from A and B (A and B are selectively performed); in some embodiments, both A and B (both A and B are performed). The same applies when there are more items such as A, B, C.

In some embodiments, a recitation such as "A or B" may include the following technical solutions as appropriate: in some embodiments, A (performing A independently of B); in some embodiments, B (performing B independently of A); in some embodiments, selectively performing from A and B (A and B are selectively performed). The same applies when there are more items such as A, B, C.

Prefixes such as "first" and "second" in the embodiments of the disclosure are merely used to distinguish different description objects and do not limit the position, order, priority, number, or content of the description objects. For the description of the description objects, refer to the description in the claims or the context of the embodiments, and unnecessary limitations shall not be constituted due to the use of the prefixes. For example, when the description object is a "field", the ordinal numbers before "field" in "the first field" and "the second field" do not limit the position or order between the "fields", and "first" and "second" do not limit whether the "fields" modified thereby are in the same message or the order between "the first field" and "the second field". For another example, when the description object is a "level", the ordinal numbers before "level" in "the first level" and "the second level" do not limit the priority between the "levels". For yet another example, the number of the description object is not limited by the ordinal number and may be one or more. Taking "the first apparatus" as an example, the number of the "apparatus" may be one or more. In addition, objects modified by different prefixes may be the same or different. For example, when the description object is an "apparatus", "the first apparatus" and "the second apparatus" may be the same or different apparatuses, and their types may be the same or different; for another example, when the description object is "information", "the first information" and "the second information" may be the same or different information, and their contents may be the same or different.

In some embodiments, expressions such as "including A", "containing A", "used to indicate A", and "carrying A" may be interpreted as directly carrying A or indirectly indicating A.

In some embodiments, the terms "in response to...", "in response to determining that...", "in the case that...", "when...", "at the time when...", "if...", and "in the event that..." may be used interchangeably.

In some embodiments, terms such as "greater than", "greater than or equal to", "not less than", "more than", "more than or equal to", "no less than", "higher than", "higher than or equal to", "not lower than", and "above" may be used interchangeably; terms such as "less than", "less than or equal to", "not greater than", "fewer than", "fewer than or equal to", "no more than", "lower than", "lower than or equal to", "not higher than", and "below" may be used interchangeably.

In some embodiments, an apparatus and a device may be interpreted as physical or virtual. Their names are not limited to those recorded in the embodiments, and may also be understood as equipment, device, circuit, node, function, unit, section, system, network, chip, chip system, entity, subject and the like in certain cases.

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" may be used interchangeably.

In some embodiments, the terms "terminal", "terminal", "UE", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "wireless terminal", "remote terminal", "handset", "user agent", "mobile client", and "client" may be used interchangeably.

In some embodiments, the access network device, the core network device, or the network device may be replaced with a terminal. For example, the embodiments of the disclosure may also be applied to a structure where communication between the access network device, the core network device, or the network device and the terminal is replaced with communication among a plurality of terminals (such as device-to-device (D2D), vehicle-to-everything (V2X), etc.). In this case, a structure may also be adopted in which the terminal has all or part of the functions of the access network device. In addition, terms such as "uplink (UL)" and "downlink (DL)" may also be replaced with terms corresponding to communication between terminals (such as "side"). For example, an UL channel and a DL channel may be replaced with a sidelink channel, and an UL and a DL may be replaced with a sidelink.

In some embodiments, the terminal may be replaced with the access network device, the core network device, or the network device. In this case, a structure may also be adopted in which the access network device, the core network device, or the network device has all or part of the functions of the terminal.

In some embodiments, terms such as "UL", "UL link" and "physical UL" are interchangeable; terms such as "DL", "DL link" and "physical DL" are interchangeable; terms such as "side", "sidelink", "sidelink communication", "direct link", "direct link communication" are interchangeable.

In some embodiments, terms including "downlink control information (DCI)", "DL assignment", "DL DCI", "UL grant" and "UL DCI" are interchangeable.

In some embodiments, terms such as "physical downlink shared channel (PDSCH)" and "DL data" are interchangeable; terms such as "physical uplink shared channel (PUSCH)" and "UL data" are interchangeable.

In some embodiments, "acquire", "obtain", "get", "receive", "transmit", "bidirectional transmission", "send and/or receive" are interchangeable. These terms can be interpreted in multiple ways, such as receiving from other subjects, obtaining from protocols, deriving through self-processing, and autonomous implementation.

In some embodiments, terms including "send", "transmit", "report", "deliver", "transmit", "bidirectional transmission", "send and/or receive" are interchangeable.

In some embodiments, "predetermined" and "preset" may mean being specified in advance in protocols, or performing pre-set operations by an apparatus.

In some embodiments, acquiring data, information, etc., may comply with the laws and regulations of the country where it is located.

In some embodiments, data, information, etc., may be acquired with the user's consent.

In addition, each element, each row, or each column in the tables of the embodiments of the disclosure may be implemented as a separate embodiment, and any combination of any elements, any rows, or any columns may also be implemented as a separate embodiment.

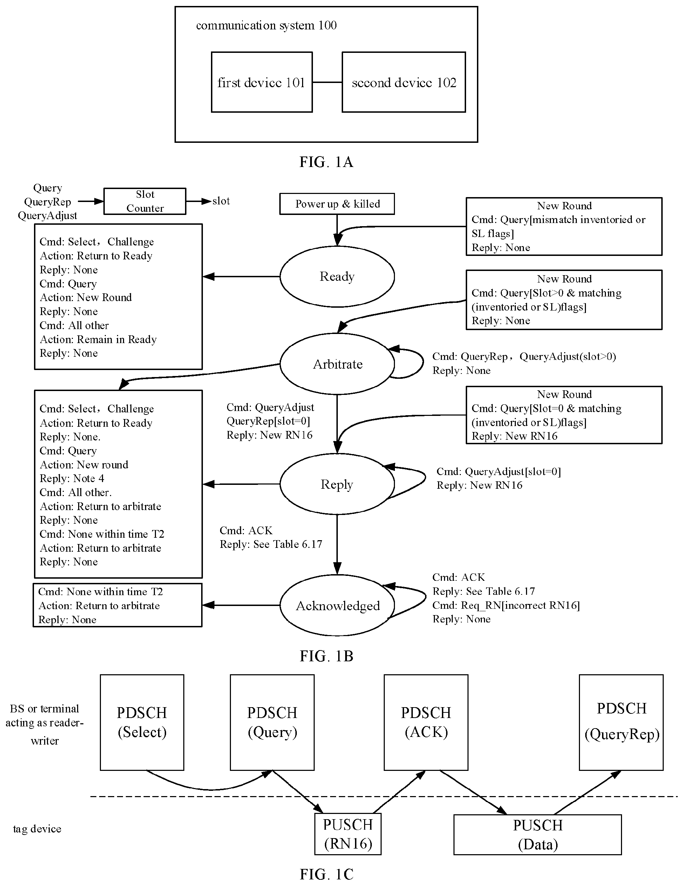

FIG. 1A is a schematic architecture diagram of a communication system according to an embodiment of the disclosure. As shown in FIG. 1A, a communication system 100 may include a first device 101 and a second device 102.

In some embodiments, a terminal may include at least one of a mobile phone, a wearable device, an Internet of Things (IoT) device, a vehicle with communication functions, an intelligent vehicle, an on-board terminal, a tablet computer (Pad), a computer with wireless transceiving functions, a road side unit (RSU), a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, or a wireless terminal in a smart home, but is not limited thereto. The communication system described in the embodiments of the disclosure is intended to illustrate the technical solutions of the embodiments of the disclosure more clearly, and does not constitute a limitation on the technical solutions in the embodiments of the disclosure. Those of ordinary skill in the art will appreciate that, with the evolution of system architectures and the emergence of new service scenarios, the technical solutions provided in the embodiments of the disclosure are also applicable to similar technical problems. The following embodiments of the disclosure may be applied to the communication system 100 shown in FIG. 1A or some subjects thereof, but are not limited thereto. The subjects shown in FIG. 1A are exemplary; a communication system may include all or some of the subjects in FIG. 1A, and may also include other subjects beyond those in FIG. 1A. The number and form of each subject are arbitrary; each subject may be physical or virtual. Connection relationships between the subjects are exemplary. The subjects may or may not be connected to each other, the connection between the subjects may be in any manner, which may be a direct connection or an indirect connection, and may be a wired connection or a wireless connection.

The embodiments of the disclosure may be applied to long term evolution (LTE), LTE-advanced (LTE-A), LTE-beyond (LTE-B), SUPER 3G, international mobile telecommunications-advanced (IMT-Advanced), 4th generation mobile communication system (4G), 5th generation mobile communication system (5G), 5G new radio (NR), future radio access (FRA), new-radio access technology (new RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wide band (UWB), Bluetooth (registered trademark), public land mobile network (PLMN), device-to-device (D2D) system, machine to machine (M2M) system, IoT system, vehicle-to-everything (V2X), systems using other measurement methods, next-generation systems extended based on them, etc. In addition, a plurality of systems may be combined (for example, a combination of LTE or LTE-A and 5G, etc.) for application.

In some embodiments, radio frequency identification (RFID) is an automatic identification technology. RFID realizes contactless information transmission through spatial coupling (alternating magnetic field or electromagnetic field) by using radio frequency signals, and achieves identification based on the transmitted information. RFID inventory is executed by means of a select command set, an inventory command set and an access command set.

In some embodiments, the Select command set includes Select and Challenge commands. A reader-writer can select one or more tags from a tag group according to data stored in tags via the Select command, and query the encryption and authentication types of one or more tags through the Challenge command. The reader-writer can further perform inventory or access operations on the selected one or more tags.

In some embodiments, the Inventory command set includes Query, QueryAdjust, QueryRep, ACK and NAK commands, which allow the reader-writer to identify one or more tags. One inventory round starts with a Query command and terminates when Query commands are continuously sent or when Select and Challenge commands are transmitted. The Query command needs to be associated with one of four defined sessions (S0, S1, S2 and S3), and one session only supports one inventory round. Multiple tags may respond in a single inventory round. The reader-writer detects a single tag response and requests an EPC code of the tag.

In some embodiments, the Access command set includes Req_RN, Read, Write, Lock, Kill, Access, BlockWrite, BlockErase, BlockPermalock, Authenticate, ReadBuffer, SecureComm, AuthComm, KeyUpdate, Untraceable, FileOpen, FileList, FilePrivilege, FileSetup and TagPrivilege commands. The reader-writer can perform read, write, lock, kill and other operations on tags, execute security-related operations such as authentication, and conduct file-related operations including opening files stored in tags. The access operation consists of multiple commands, and one reader-writer may only support accessing a single tag.

FIG. 1B is a schematic diagram of a tag state according to an embodiment of the disclosure. As shown in FIG. 1B, a tag enters an arbitrate state after receiving a Query command, which may be deemed as a "holding state" of the tag. The tag sets a corresponding counter value according to a Q value in the command, and decreases the value by 1 each time a QueryRep command is received. When the value becomes zero, the tag switches to a Reply state and backscatters RN16 (16-bit random number). If an ACK is subsequently received, successful access of the tag is confirmed. If an invalid ACK or an ACK carrying incorrect RN16 is received, or no corresponding command is received within the maximum waiting time T2, the tag returns to the arbitrate state.

In some embodiments, in the design of ambient IoT, it is required to support non-activated devices. Such non-activated devices have no radio frequency transmission capability, and need to acquire transmission energy by means of backscattering. The 3GPP design shall at least take tag inventory as a basic use case, and relevant design can refer to RFID technology.

In some embodiments, inventory commands of Ambient IoT are carried by channels including PDSCH and PUSCH. In scenarios including but not limited to a BS serving as a reader and a tag serving as a device, the corresponding inventory commands and replies of tag devices may still be carried by PDSCH/PUSCH similarly to NR. FIG. 1C is a schematic diagram of an inventory process according to an embodiment of the disclosure. As shown in FIG. 1C, a BS or a terminal acting as a reader-writer may transmit Select signaling, Query signaling, ACK and QueryRep signaling over the PDSCH, and tag devices may transmit RN16 and data over the PUSCH.

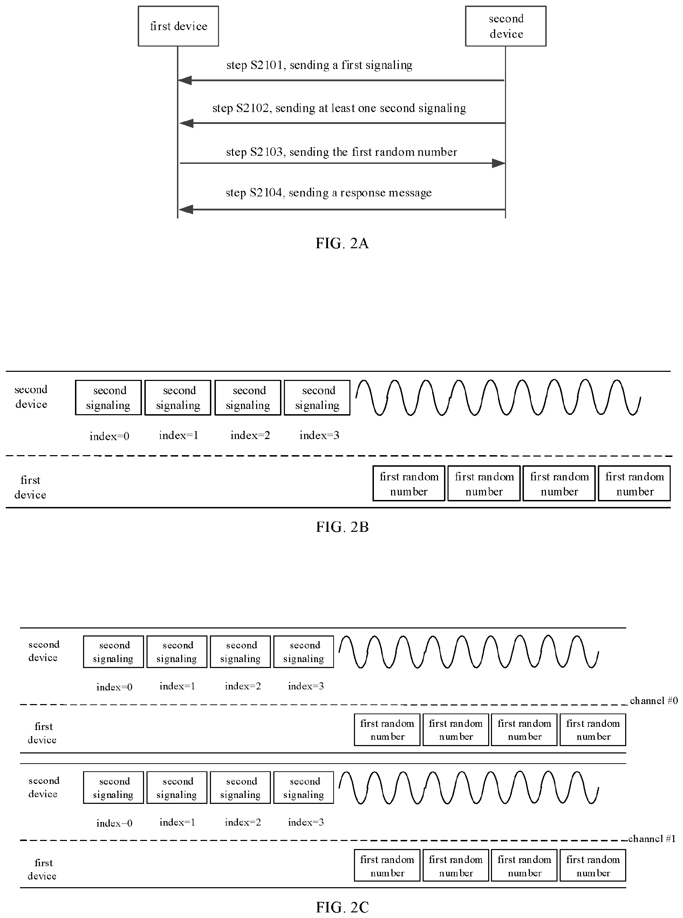

FIG. 2A is a schematic interaction diagram of a communication method according to an embodiment of the disclosure. As shown in FIG. 2A, embodiments of the disclosure relate to a communication method applicable to the communication system 100. The method is described as follows.

At step S2101, a second device sends a first signaling to a first device.

In some embodiments, the first device may be a tag device or a tag terminal, and the second device may be a BS or a terminal acting as a reader-writer.

In some embodiments, the second device transmits the first signaling to the first device. The first signaling includes first information. The first information is information related to a total quantity of time units in a time unit set, and a time unit includes at least one time slot.

In some embodiments, the first device receives the first signaling.

In some embodiments, the first signaling is configured to instruct the first device to determine a first random number and a first sequence number, where the first sequence number refers to a sequence number of a time unit for sending the first random number.

In some embodiments, the first signaling further includes second information, the first signaling is further configured to instruct the first device to determine a threshold according to at least one of the first information or the second information, the threshold refers to a number of times a second signaling needs to be received before sending the first random number to the second device, and the second signaling is configured to instruct the first device to enter a next sending occasion.

In some embodiments, the first signaling includes but is not limited to a Query signaling, and the second signaling includes but is not limited to a QueryRep signaling.

In some embodiments, the first information may include the total quantity of time units or a value obtained by raising 2 to the power of the total quantity of time units. For instance, if the first information includes the value obtained by raising 2 to the power of the total quantity of time units and the total quantity of time units is 5, the first information may include 25.

In some embodiments, the first information and the second information satisfy any of the following relationships:
the first information is the total quantity of time units or a value obtained by raising 2 to the power of the total quantity of time units, and the second information is a Q value; or
the first information is the total quantity of time units, and the second information is a product of the total quantity of time units and the Q value.

In some embodiments, the first signaling also includes third information, the third information indicates at least one of:
an uplink channel or a sidelink channel;
a data rate and a modulation format transmitted on an uplink or a sidelink; or
whether a pilot transmitted on an uplink or a sidelink is an extended pilot.

In some embodiments, the first information further includes a quantity of time units indicated by the second device for the first device to send the first random number.

At step S2102, the second device sends at least one second signaling to the first device.

In some embodiments, the second device repeatedly transmits the second signaling, and the second signaling carries an index value related to a total quantity of repeated transmissions of the second signaling.

In some embodiments, the first device receives the at least one second signaling.

At step S2103, the first device sends the first random number to the second device.

In some embodiments, the first device may determine the quantity of time units for sending the first random number based on at least one of the quantity of time units indicated by the second device; a self-capability of the first device; or a coverage level of the first device

In some embodiments, transmitting the first random number from the first device to the second device often requires more than one time unit. This application determines how many time units are needed for the first device to send the first random number to the second device by calculating the quantity of time units used for sending the first random number.

In some embodiments, the first device determines a threshold according to at least one of the first information or the second information, and the threshold refers to a number of times the second signaling needs to be received before sending the first random number to the second device.

In some embodiments, when the first information is the total quantity of time units or the value obtained by raising 2 to the power of the total quantity of time units, and the second information is the Q value, determining the second sequence number according to the first signaling includes:
determining a third random number according to the first information, in which a value range of the third random number is determined by a quantity of first time units and the first information; and
taking the third random number as the second sequence number;
the method further includes:
determining a second random number according to the second information, and taking the second random number as the threshold.

For example, the first information is the total quantity of time units R, and R is set to 9. The Q value in the second information is set to 10. A random number n1 corresponding to the Q value may be generated with a value range of [0,2^{Q}-1], namely [[0,2¹⁰-1], and n1 is taken as the threshold. The third random number is generated according to the total quantity of time units R, with the value range of $\left[0,\frac{R}{N}-1\right]$. R denotes the total quantity of time units, N represents the quantity of time units for sending the first random number, and the value range of N is [1, 2, 4]. When N is 1, the value range of the third random number is [0, 7]; when N is 2, the value range of the third random number is [0, 3]. The third random number serves as the second sequence number.

In another example, the first information is the value obtained by raising 2 to the power of the total quantity of time units, R is set to 8 and the Q value in the second information is set to 10. The random number n1 corresponding to the Q value is generated with a value range of [0,2^{Q}-1], and it can be known that the value range of n1 is [0, 1023]. n1 is set as the threshold. The third random number is generated based on the value of 2 raised to the power of the total quantity of time units, and the value range of the third random number is [0,2^{R/N}-1]. R is the total quantity of time units, N is the quantity of time units for sending the first random number with the value range of [1, 2, 4]. When N is 1, the value range of the third random number is [0, 255]; when N is 4, the value range of the third random number is [0, 3]. The third random number serves as the second sequence number.

In some embodiments, when the first information is the total quantity of time units, and the second information is the product of the total quantity of time units and the Q value, determining the second sequence number according to the first signaling includes:
taking a quotient of the first information and the quantity of the first time units as a first result;
determining a fourth random number according to the second information; and
taking a result obtained by performing a modulo operation on the fourth random number and the first result as the second sequence number;
the method further including:
taking a quotient of the fourth random number and the first result as the threshold.

For example, the first information is the total quantity of time units R, set R to 8. The second information is the product of the total quantity of time units R and the Q value. If the Q value is 2, the second information is 16. The fourth random number n1 is determined according to the second information, and the value range of n1 is [0, 65535]. N denotes the quantity of time units for sending the first random number, and the value range of N is [1, 2, 4]. When N is 1, the quotient of the total quantity of time units and the quantity of time units for sending the first random number is denoted as S, where S=R/N, so S is equal to 8. The quotient of the fourth random number n1 and S is taken as the threshold, and the result obtained by performing the modulo operation on the fourth random number n1 and S is taken as the second sequence number.

In some embodiments, when the first information is the total quantity of time units, and the second information is the Q value, determining the second sequence number according to the first signaling includes:
determining the second sequence number according to the first information and the third information;
the method further including:
generating a fifth random number according to the second information, and taking the fifth random number as the threshold.

For example, the first information is the total quantity of time units R, set R to 8, and the Q value in the second information is 10. The fifth random number n1 is generated based on the Q value, with the value range of n1 being [0,2^{Q}-1], namely [0, 1023]. The fifth random number n1 is set as the threshold. Meanwhile, the second sequence number M is determined according to the third information. The second sequence number M may be greater than the total quantity of time units R. For instance, when R is 10, the modulo operation should be performed on the second sequence number M to obtain a remainder, that is 10 mod 8=2, so the final calculated second sequence number M is 2.

In some embodiments, the second sequence number refers to a sequence number of a time unit in a time unit set for sending the first random number.

In some embodiments, a quotient of the second sequence number and the quantity of time units for sending the first random number is rounded down to obtain a first result, and a product of the first result and the quantity of time units for sending the first random number is taken as the third sequence number.

For example, when the second sequence number M is 9, and the quantity of time units N for sending the first random number is 4, a calculation formula of the third sequence number thus is $\left⌊\frac{M}{N}\right⌋ ∗ N$, that is $\left⌊\frac{9}{4}\right⌋ ∗ 4 = 8$. Thus, the third sequence number is 8.

In some embodiments, the third sequence number is a sequence number of an initial time unit for the first device to send the first random number to the second device.

In some embodiments, the first sequence number is determined according to the third sequence number and the quantity of time units for sending the first random number.

For example, when the third sequence number is 8 and the quantity of time units for sending the first random number is 4, the first sequence number corresponds to four time units starting from 8, namely 8, 9, 10 and 11. That is to say, the first device may occupy the four time units 8, 9, 10 and 11 to transmit the first random number.

In some embodiments, the first device is preconfigured with a mapping relationship between index values and time unit subsets. A first time unit is a time unit corresponding to the first sequence number in a first time unit subset, and the first time unit subset has a mapping relationship with the index value.

For example, it is assumed that a total number of times the second device repeatedly transmits the second signaling is 4. The second device repeatedly sends the second signaling to at least one first device, and each piece of the second signaling carries an index value whose value range does not exceed 4.

Each first device possesses the mapping relationship between index values and time unit subsets. For example, an index value of 1 maps to the first time unit subset, and an index value of 2 maps to a second time unit subset. After receiving the second signaling, the first device obtains the index value contained in the second signaling, and determines the time unit subset corresponding to the index value according to the mapping relationship. Further, the second sequence number, threshold and the quantity of time units for sending the first random number within the time unit subset corresponding to the index value are determined by the method described in step S2101. The third sequence number is determined based on the second sequence number and the quantity of time units for sending the first random number. Finally, the first sequence number, i.e. the sequence number of the time unit for the first device to transmit the first random number, is determined according to the third sequence number and the quantity of time units for sending the first random number.

FIG. 2B is a working schematic diagram of a communication method according to an embodiment of the disclosure. As shown in FIG. 2B, above a dashed line, the second device repeatedly sends the second signaling to four first devices. The second signaling sent to an initial first device carries an index value of 0, the second signaling sent to a second first device carries an index value of 1, the second signaling sent to a third first device carries an index value of 2, and the second signaling sent to a fourth first device carries an index value of 3. Below the dashed line, the four first devices transmit the first random numbers back to the second device.

After receiving the second signaling, each first device extracts the index value carried by the second signaling, and determines a time unit subset corresponding to the index value based on the mapping relationship between index values and time unit subsets. The first sequence number and the first random number corresponding to the time unit subset are determined by the method in step S2101, where the first sequence number refers to the sequence number of the time unit for the first device to send the first random number in the time unit subset. When the threshold of the second signaling to be received by the first device is less than or equal to 0, the first device sends the first random number to the second device by using the time unit corresponding to the first sequence number.

In some embodiments, the first device is preconfigured with a mapping relationship between index values and channels.

In some embodiments, sending the first random number to the second device at the first time unit includes sending the first random number to the second device via a channel corresponding to the index value and at the first time unit.

For example, it is assumed that a total number of times the second device repeatedly transmits the second signaling is 4. The second device repeatedly transmits the second signaling to at least one first device, and each second signaling carries an index value whose value range does not exceed 4.

Each first device has the mapping relationship between index values and time unit subsets as well as the mapping relationship between index values and channel subsets. For instance, an index value of 1 maps to the first time unit subset and a first channel subset, and an index value of 2 maps to the second time unit subset and a second channel subset. After determining the time unit subset and channel subset corresponding to the index value, a transmission channel is determined according to the channel subset. The second sequence number, threshold and the quantity of time units for sending the first random number are determined by the method in step S2101. The third sequence number is determined according to the second sequence number and the quantity of time units for sending the first random number. The first sequence number which represents the sequence number of the time unit for the first device to send the first random number is determined according to the third sequence number and the quantity of time units for sending the first random number, and the first random number is sent at the time unit corresponding to the first sequence number on the transmission channel.

In some embodiments, a channel subset may include one of a working channel, a carrier and a frequency point.

FIG. 2C is a working schematic diagram of a communication method according to an embodiment of the disclosure. As shown in FIG. 2C, above a dashed line, the second device repeatedly sends the second signaling to four first devices on channel #0 and repeatedly sends the second signaling to four first devices on channel #1. As shown in the figure, on channel #0, an index value carried by the second signaling transmitted by the second device to an initial first device is 0, an index carried by the second signaling transmitted to a second first device is 1, an index carried by the second signaling transmitted to a third first device is 2, and an index carried by the second signaling transmitted to a fourth first device is 3. On channel #1, an index carried by the second signaling transmitted by the second device to a fifth first device is 0, an index carried by the second signaling transmitted to a sixth first device is 1, an index carried by the second signaling transmitted to a seventh first device is 2, and an index carried by the second signaling transmitted to an eighth first device is 3. Below the dashed line, the four first devices on channel #0 determine channel #0 as a transmission channel based on index values, and send their respective first random numbers to the second device via channel #0 after the received second signaling meets the threshold. The four first devices on channel #1 determine channel #1 as a transmission channel based on index values, and send their respective first random numbers to the second device via channel #1 respectively after the received second signaling meets the threshold.

After receiving the second signaling transmitted by the second device via the corresponding channel, each first device extracts the index value carried by the second signaling, determines the time unit subset and channel subset corresponding to the index value based on the mapping relationship between index values and time unit subsets as well as the mapping relationship between index values and channel subsets, determines the transmission channel according to the channel subset, and determines the first sequence number and the first random number corresponding to the time unit subset corresponding to the index value by the method in step S2101. The first sequence number refers to the sequence number of the time unit for the first device to send the first random number in the time unit subset. When the threshold of the second signaling to be received by the first device is less than or equal to 0, the first device sends the first random number to the second device via the transmission channel. For example, the initial first device receives the second signaling, via channel #0, sent by the second device, and determines, according to the index value carried by the second signaling, channel #0 as the transmission channel and determines the first sequence number. When the threshold of the second signaling to be received is less than or equal to 0, the first device sends the first random number to the second device by using the time unit corresponding to the first sequence number on channel #0.

In some embodiments, the first device subtracts a preset value from the threshold of the second signaling to be received every time one second signaling is received.

For example, when the received second information is the Q value, the threshold of the second signaling to be received is reduced by 1 each time one second signaling is received. When the second information is the product of the total quantity of time units and the Q value, the threshold of the second signaling to be received is reduced by the total quantity of time units each time one second signaling is received.

In some embodiments, the first device sends the first random number to the second device when the threshold of the second signaling to be received is equal to 0 or less than 0.

In some embodiments, the first random number may be a 16-bit random number, namely RN16, or a random number with other bit lengths.

In some embodiments, a first start time when the second device receives the first random number from an initial first device is later than a first end time when the second device sends the first signaling to a last first device, and a difference between the first start time and the first end time is not less than a first threshold.

At step S2104, the second device sends a response message to the first device.

In some embodiments, when the second device receives the first random number sent by the first device, the second device sends the response message, and the response message indicates that the first device successfully accesses a channel.

In some embodiments, the response message sent by the second device contains ACK information of at least one first device. The ACK information of each first device is the same as the first random number sent by the corresponding first device to the second device, and the ACK information of each first device is located in a corresponding field of the response message.

In some embodiments, a second end time when the second device receives the first random number from the last first device is earlier than a second start time when the second device sends the response message to the initial first device, and a difference between the second end time and the second start time is not less than a second threshold.

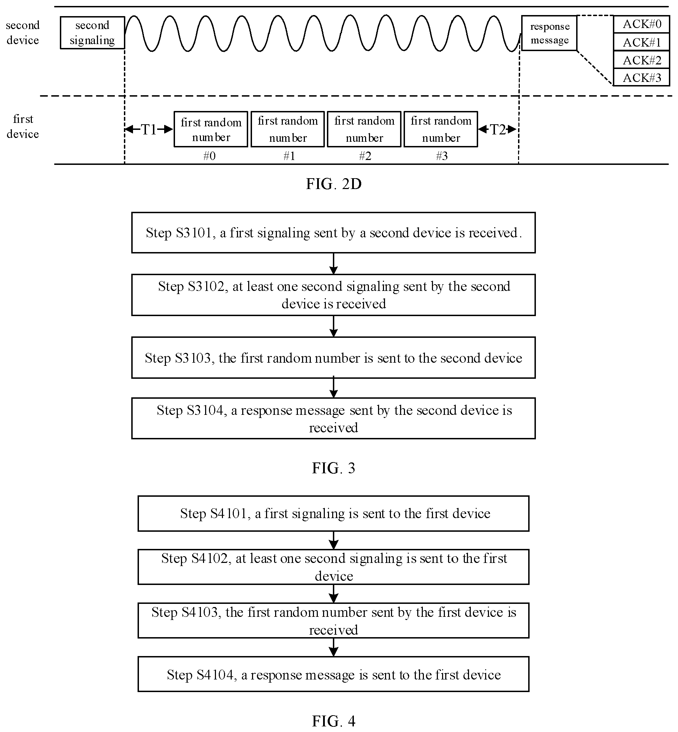

FIG. 2D is a working schematic diagram of a communication method according to an embodiment of the disclosure. As shown in FIG. 2D, the second device sends at least one second signaling to four first devices numbered #0, #1, #2 and #3 respectively. After receiving the second signaling, each first device subtracts a preset value from the threshold of the second signaling to be received. When the threshold is less than or equal to 0, the first device sends the first random number to the second device. After receiving the first random numbers sent by the four first devices, the second device sends the response message to the four first devices. The response message contains ACK information of the four devices, and the ACK information of each first device is arranged in the corresponding field. The ACK information of the first device numbered #0 is located at bits 0 to 15 of the response message, the ACK information of the first device numbered #1 is located at bits 16 to 31, the ACK information of the first device numbered #2 is located at bits 32 to 47, and the ACK information of the first device numbered #3 is located at bits 48 to 63.

T1 represents the first threshold value and T2 represents the second threshold value. A start time when the second device receives the first random number from the first device numbered #0 is later than an end time when the second device sends the first signaling to the last first device, and the difference between the start time and the end time is not less than T1.

An end time when the second device receives the first random number from the first device numbered #3 is earlier than a start time when the second device sends the response message, and the difference between the end time and the start time is not less than T2.

In some embodiments, reference may be made to other optional implementations recorded before or after the specification corresponding to FIG. 2.

FIG. 3 is a flowchart of a communication method according to an embodiment of the disclosure. As shown in FIG. 3, embodiments of the disclosure relate to a communication method performed by the first device 101, and the communication method includes the following contents.

At step S3101, a first signaling sent by a second device is received.

For optional implementations of step S3101, reference may be made to the optional implementations of step S2101 in FIG. 2A and other relevant parts in the embodiments related to FIG. 2A, which are not repeated herein.

In some embodiments, the first device is a tag device.

In some embodiments, the first device receives the first signaling sent by the second device, and the first signaling includes first information. The first information is information related to a total quantity of time units in a time unit set, and a time unit includes at least one time slot.

In some embodiments, the first signaling is configured to instruct the first device to determine a first random number and a first sequence number, where the first sequence number refers to a sequence number of a time unit for sending the first random number.

In some embodiments, the first signaling further includes second information, the first signaling is further configured to instruct the first device to determine a threshold according to at least one of the first information or the second information, the threshold refers to a number of times a second signaling needs to be received before sending the first random number to the second device, and the second signaling is configured to instruct the first device to enter a next sending occasion.

In some embodiments, the first signaling includes but is not limited to a Query signaling, and the second signaling includes but is not limited to a QueryRep signaling.

In some embodiments, the first device determines the second sequence number and the threshold according to the first information and the second information.

At step S3102, at least one second signaling sent by the second device is received.

For optional implementations of step S3102, reference may be made to the optional implementations of step S2102 in FIG. 2A and other relevant parts in the embodiments related to FIG. 2A, which are not repeated herein.

In some embodiments, the first device receives the second signaling repeatedly sent by the second device. Each second signaling carries an index value, and the index value is related to a total quantity of repeated transmissions of the second signaling.

At step S3103, the first random number is sent to the second device.

For optional implementations of step S3103, reference may be made to the optional implementations of step S2103 in FIG. 2A and other relevant parts in the embodiments related to FIG. 2A, which are not repeated herein.

In some embodiments, the first device determines the second sequence number and the threshold according to the first information and the second information.

In some embodiments, the first device subtracts a preset value from the threshold of the second signaling to be received each time one second signaling is received.

In some embodiments, the first device sends the first random number to the second device when the threshold of the second signaling to be received is equal to 0 or less than 0.

In some embodiments, the first random number is a 16-bit random number RN16 or a random number with other bit lengths.

At step S3104, a response message sent by the second device is received.

For optional implementations of step S3104, reference may be made to the optional implementations of step S2104 in FIG. 2A and other relevant parts in the embodiments related to FIG. 2A, which are not repeated herein.

In some embodiments, the response message includes ACK information of at least one first device. The ACK information of each first device is identical to the first random number sent by the first device to the second device, and the ACK information of each first device is located in the corresponding field of the response message.

FIG. 4 is a flowchart of a communication method according to an embodiment of the disclosure. As shown in FIG. 4, embodiments of the disclosure relate to a communication method performed by the second device 102, and the communication method includes the following contents.

At step S4101, a first signaling is sent to the first device.

For optional implementations of step S4101, reference may be made to the optional implementations of step S2101 in FIG. 2A and other relevant parts in the embodiments related to FIG. 2A, which are not repeated herein.

In some embodiments, the second device is a BS or a terminal serving as a reader-writer.

In some embodiments, the first signaling sent by the second device to the first device includes first information. The first information is information related to a total quantity of time units in a time unit set, and a time unit includes at least one time slot.

In some embodiments, the first signaling is configured to instruct the first device to determine a first random number and a first sequence number, where the first sequence number refers to a sequence number of a time unit for sending the first random number.

In some embodiments, the first signaling further includes second information, the first signaling is further configured to instruct the first device to determine a threshold according to at least one of the first information or the second information, the threshold refers to a number of times a second signaling needs to be received before sending the first random number to the second device, and the second signaling is configured to instruct the first device to enter a next sending occasion.

In some embodiments, the first signaling includes but is not limited to a Query signaling, and the second signaling includes but is not limited to a QueryRep signaling.

At step S4102, at least one second signaling is sent to the first device.

For optional implementations of step S4102, reference may be made to the optional implementations of step S2102 in FIG. 2A and other relevant parts in the embodiments related to FIG. 2A, which are not repeated herein.

In some embodiments, the second device repeatedly sends the second signaling to the first device. Each second signaling carries an index value, and the index value is related to a total quantity of repeated transmissions of the second signaling.

At step S4103, the first random number sent by the first device is received.

For optional implementations of step S4103, reference may be made to the optional implementations of step S2103 in FIG. 2A and other relevant parts in the embodiments related to FIG. 2A, which are not repeated herein.

In some embodiments, the second device receives the first random number sent by the first device.

In some embodiments, the first random number is a 16-bit random number RN16 or a random number with other bit lengths.

At step S4104, a response message is sent to the first device.

For optional implementations of step S4104, reference may be made to the optional implementations of step S2104 in FIG. 2A and other relevant parts in the embodiments related to FIG. 2A, which are not repeated herein.

In some embodiments, the second device sends the response message when receiving the first random number sent by the first device, and the response message indicates that the first device successfully accesses a channel.

In some embodiments, the response message sent by the second device includes ACK information of at least one first device. The ACK information of each first device is identical to the first random number sent by the first device to the second device, and the ACK information of each first device is located in the corresponding field of the response message.

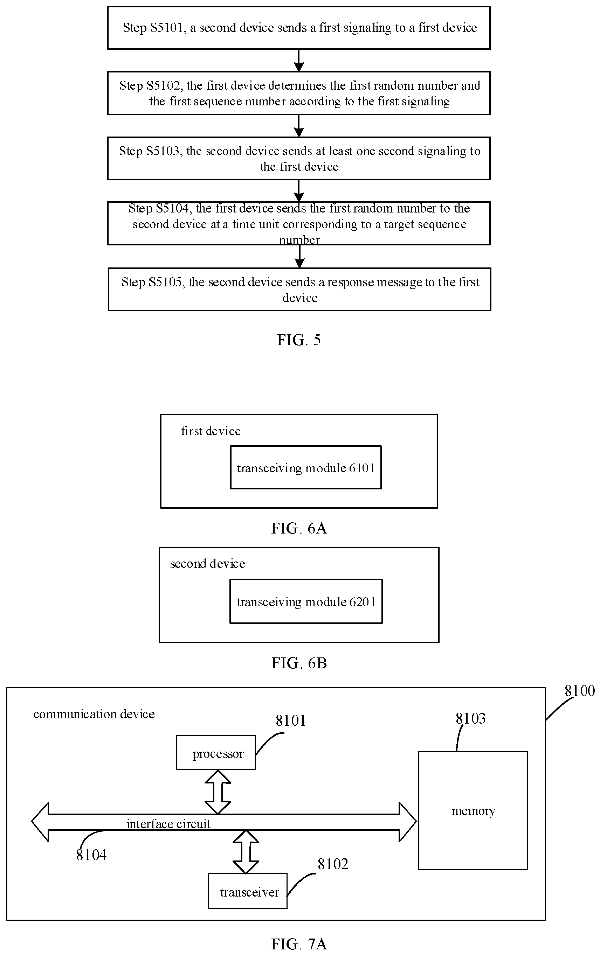

FIG. 5 is a schematic interaction diagram of a communication method according to an embodiment of the disclosure. As shown in FIG. 5, embodiments of the disclosure relate to a communication method applied to communication system 100, and the communication method includes the following contents.

At step S5101, a second device sends a first signaling to a first device.

For optional implementations of step S5101, reference may be made to the optional implementations of step S2101 in FIG. 2A and step S4101 in FIG. 4, as well as other relevant parts in the embodiments related to FIG. 2A and FIG. 4, which are not repeated herein.

In some embodiments, the first device is a tag device or a tag terminal, and the second device is a BS or a terminal serving as a reader-writer.

In some embodiments, the first device receives the first signaling sent by the second device. The first signaling includes first information, and the first information is information related to a total quantity of time units in a time unit set. A time unit includes at least one time slot.

In some embodiments, the first signaling is configured to instruct the first device to determine a first random number and a first sequence number, where the first sequence number refers to a sequence number of a time unit for sending the first random number.

In some embodiments, the first signaling further includes second information, the first signaling is further configured to instruct the first device to determine a threshold according to at least one of the first information or the second information, the threshold refers to a number of times a second signaling needs to be received before sending the first random number to the second device, and the second signaling is configured to instruct the first device to enter a next sending occasion.

In some embodiments, the first signaling includes but is not limited to a Query signaling, and the second signaling includes but is not limited to a QueryRep signaling.

At step S5102, the first device determines the first random number and the first sequence number according to the first signaling.

For optional implementations of step S5102, reference may be made to step S2101 in FIG. 2A, step S3101 in FIG. 3 and other relevant parts in the embodiments related to FIG. 2A and FIG. 3, which are not repeated herein.

In some embodiments, the first device determines the second sequence number and the threshold according to the first information and the second information.

At step S5103, the second device sends at least one second signaling to the first device.

For optional implementations of step S5103, reference may be made to the optional implementations of step S2102 in FIG. 2A and step S4102 in FIG. 4, as well as other relevant parts in the embodiments related to FIG. 2A and FIG. 4, which are not repeated herein.

In some embodiments, the second device continues to send at least one second signaling after sending the first signaling to the first device.

In some embodiments, the second device repeatedly sends the second signaling to the first device. Each second signaling carries an index value, and the index value is related to a total quantity of repeated transmissions of the second signaling.

In some embodiments, the first device receives at least one second signaling sent by the second device.

At step S5104, the first device sends the first random number to the second device at a time unit corresponding to the first sequence number.

For optional implementations of step S5104, reference may be made to the optional implementations of step S2103 in FIG. 2A and step S3103 in FIG. 3, as well as other relevant parts in the embodiments related to FIG. 2A and FIG. 3, which are not repeated herein.

In some embodiments, the first device subtracts a preset value from the threshold of the second signaling to be received each time one second signaling is received.

In some embodiments, the first device sends the first random number to the second device when the threshold of the second signaling to be received is equal to 0 or less than 0.

In some embodiments, the second device receives the first random number sent by the first device.

At step S5105, the second device sends a response message to the first device.

For optional implementations of step S5105, reference may be made to the optional implementations of step S2104 in FIG. 2A and step S4104 in FIG. 4, as well as other relevant parts in the embodiments related to FIG. 2A and FIG. 4, which are not repeated herein.

In some embodiments, when the second device receives the first random number sent by the first device, the second device transmits the response message, and the response message indicates that the first device successfully accesses the channel.

In some embodiments, the response message includes ACK information of at least one first device. The ACK information of each first device is identical to the first random number sent by the first device to the second device, and the ACK information of each first device is located in the corresponding field of the response message.

Embodiments of the present disclosure also provide an apparatus for implementing any of the above methods. For instance, an apparatus is provided, which includes units or modules configured to perform each step executed by the first device 101 in any of the above methods. In addition, another apparatus is provided, which comprises units or modules configured to perform each step executed by the second device 102 in any of the above methods.

It should be understood that the division of each unit or module in the above apparatus is only a division of logical functions, which may be fully or partially integrated into a physical entity or physically separated in actual implementation. Moreover, the units or modules in the apparatus may be implemented in the form of calling software by a processor: for example, the apparatus includes a processor, which is connected with a memory, and instructions are stored in the memory, and the processor calls the instructions stored in the memory to implement any of the above methods or implement the functions of the units or modules of the apparatus, in which the processor is a general-purpose processor, such as a central processing unit (CPU) or a microprocessor, and the memory is a memory in the apparatus or a memory outside the apparatus. Alternatively, the units or modules in the apparatus may be implemented in the form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above apparatus may be implemented entirely in the form of calling software by the processor, or entirely in the form of hardware circuits, or partially in the form of calling software by a processor, and the rest is implemented in the form of hardware circuits.

In the embodiments of the disclosure, the processor is a circuit with signal processing capability. In an implementation, the processor may be a circuit with instruction reading and running capability, such as a CPU, a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an ASIC or a PLD, such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

FIG. 6A is a structural schematic diagram of a first device provided by an embodiment of the present disclosure. As shown in FIG. 6A, the first device may include a transceiving module 6101.

In some embodiments, the transceiving module is configured to receive a first signaling sent by the second device, and the first signaling includes first information,
the first information is information related to a total quantity of time units in a time unit set, a time unit includes at least one time slot,
the first signaling is configured to instruct the first device to determine a first random number and a first sequence number, and the first sequence number is a sequence number of a time unit for sending the first random number.

In some embodiments, the first signaling further includes second information,
the first signaling is further configured to instruct the first device to determine a threshold according to at least one of the first information or the second information, the threshold refers to a number of times a second signaling needs to be received before sending the first random number to the second device, and
the second signaling is configured to instruct the first device to enter a next sending occasion.

In some embodiments, the first device further includes:
a processing module, configured to determine the first random number;
determine the first sequence number according to the first information and the second information;
the transceiving module is configured to receive the second signaling sent by the second device until the number of times the second signaling is received reaches the threshold;
send the first random number to the second device in a first time unit, in which the first time unit is a time unit corresponding to the first sequence number in the time unit set; and
receive a response message sent by the second device, in which the response message indicates that at least one first device accesses a channel successfully.

In some embodiments, the second signaling includes an index value related to a total quantity of repeated transmissions of the second signaling,
the first time unit is a time unit corresponding to the first sequence number in a first time unit subset, the time unit set includes the first time unit subset, and the first time unit subset has a mapping relationship with the index value.

In some embodiments, a channel for sending the first random number has a mapping relationship with the index value.

In some embodiments, the processing module is configured to determine a second sequence number according to the first signaling, in which the second sequence number is a sequence number of a time unit among time units for sending the first random number;
determine a quantity of first time units;
determine a third sequence number according to the second sequence number and the quantity of the first time units, in which the third sequence number is a sequence number of an initial time unit for the first device to send the first random number to the second device; and
determine the first sequence number according to the third sequence number and the quantity of the first time units.

In some embodiments, the first information is the total quantity of time units or a value obtained by raising 2 to the power of the total quantity of time units, and the second information is a Q value; or
the first information is the total quantity of time units, and the second information is a product of the total quantity of time units and the Q value.

In some embodiments, the first signaling further includes third information, and the third information indicates at least one of:
an uplink channel or a sidelink channel;
a data rate and a modulation format transmitted on an uplink or a sidelink; or
whether a pilot transmitted on an uplink or a sidelink is an extended pilot.

In some embodiments, the quantity of the first time units is determined according to at least one of:
the quantity of first time units indicated by the second device;
a self-capability of the first device; or
a coverage level of the first device.

In some embodiments, the first information is the total quantity of time units or the value obtained by raising 2 to the power of the total quantity of time units, and the second information is the Q value,
in which determining the second sequence number according to the first signaling includes:
determining a third random number according to the first information, in which a value range of the third random number is determined by the quantity of the first time units and the first information; and
taking the third random number as the second sequence number;

In some embodiments, the method further includes:
determining a second random number according to the second information, and taking the second random number as the threshold.

In some embodiments, the first information is the total quantity of time units, and the second information is the product of the total quantity of time units and the Q value,
in which determining the second sequence number according to the first signaling includes:
taking a quotient of the first information and the quantity of the first time units as a first result;
determining a fourth random number according to the second information; and
taking a result obtained by performing a modulo operation on the fourth random number and the first result as the second sequence number.

In some embodiments, the method further includes:
taking a quotient of the fourth random number and the first result as the threshold.

In some embodiments, the first information is the total quantity of time units, and the second information is the Q value,
in which determining the second sequence number according to the first signaling includes: determining the second sequence number according to the first information and the third information.

In some embodiments, the processing module is further configured to generate a fifth random number according to the second information, and taking the fifth random number as the threshold.

In some embodiments, the above processing module is configured to perform communication steps such as sending and/or receiving executed by the first device in any of the foregoing methods, for example, step S3101, which will not be repeated herein.

FIG. 6B is a structural schematic diagram of a second device provided by an embodiment of the present disclosure. As shown in FIG. 6B, the second device may include a transceiving module 6201.

In some embodiments, the transceiving module is configured to send first signaling to at least one first device, and the first signaling includes first information,
the first information is information related to a total quantity of time units in a time unit set,
the first signaling is configured to instruct the first device to determine a first random number and a first sequence number, and the first sequence number is a sequence number of a time unit for sending the first random number.

In some embodiments, the first signaling further includes second information,
the first signaling is further configured to instruct the first device to determine a threshold according to at least one of the first information or the second information,
the threshold refers to a number of times a second signaling needs to be received before sending the first random number to the second device, and
the second signaling is configured to instruct the first device to enter a next sending occasion.

In some embodiments, the transceiving module is configured to send a second signaling to the first device;
receive the first random number sent by the first device; and
send a response message to the at least one first device, in which the response message indicates that at least one first device successfully accesses a channel.

In some embodiments, the first information is the total quantity of time units or a value obtained by raising 2 to the power of the total quantity of time units, and the second information is a Q value; or
the first information is the total quantity of time units, and the second information is a product of the total quantity of time units and the Q value.

In some embodiments, the first signaling further includes third information, and the third information indicates at least one of:
an uplink channel or a sidelink channel;
a data rate and a modulation format transmitted on an uplink or a sidelink; or
whether a pilot transmitted on an uplink or a sidelink is an extended pilot.

In some embodiments, the second signaling includes an index value related to a total quantity of repeated transmissions of the second signaling.

In some embodiments, the total quantity of time units is predefined by a protocol or determined by a configuration of the second device.

In some embodiments, a first start time when the second device receives the first random number from an initial first device is later than a first end time when the second device sends the first signaling to a last first device, and a difference between the first start time and the first end time is not less than a first threshold; and
a second end time when the second device receives the first random number from the last first device is earlier than a second start time when the second device sends the response message to the initial first device, and a difference between the second end time and the second start time is not less than a second threshold.

In some embodiments, the foregoing processing module is configured to perform communication steps such as sending and/or receiving executed by the second device in any of the above methods, for example, step S4101, which are not elaborated herein.

FIG. 7A is a structural schematic diagram of a communication device 8100 provided by an embodiment of the present disclosure. The communication device 8100 may be a network device such as an access network device or a core network device, an IoT device, or a first device, may also be a chip, a chip system or a processor that enables a network device to implement any of the above methods, as well as a chip, a chip system or a processor that enables an IoT device to implement any of the above methods. The communication device 8100 may be configured to implement the methods described in the above method embodiments, and for details reference may be made to the descriptions in the aforesaid method embodiments.

As shown in FIG. 7A, the communication device 8100 includes one or more processors 8101. The processor 8101 may be a general-purpose processor, a dedicated processor, or the like, for example, a baseband processor or a central processing unit. A baseband processor may be configured to process communication protocols and communication data, and a central processing unit may be configured to control a communication apparatus (such as a base station, a baseband chip, a terminal, a terminal chip, a DU, a CU, etc.), execute programs, and process program data. In some embodiments, the communication device 8100 may be configured to perform any of the above methods. In some embodiments, the one or more processors 8101 are configured to invoke instructions to cause the communication device 8100 to perform any of the above methods.

In some embodiments, the communication device 8100 may further include one or more transceivers 8102. When the communication device 8100 includes one or more transceivers 8102, the transceiver 8102 may perform at least one of communication steps such as sending and/or receiving in the above methods (for example, step S2101, but not limited thereto), and the processor 8101 may perform at least one of other steps (for example, step S2102, but not limited thereto). In some embodiments, a transceiver may include a receiver and/or a transmitter, and the receiver and the transmitter may be separate or integrated together. In some embodiments, terms such as transceiver, transceiver unit, transceiver machine, transceiver circuit, interface circuit, and interface may be replaced with each other; terms such as transmitter, transmitting unit, transmitting machine, and transmitting circuit may be replaced with each other; and terms such as receiver, receiving unit, receiving machine, and receiving circuit may be replaced with each other.

In some embodiments, the communication device 8100 further includes one or more memories 8103 for storing data. In some embodiments, all or part of the memory 8103 may also be located outside the communication device 8100. In an optional embodiment, the communication device 8100 may include one or more interface circuits 8104. In some embodiments, the interface circuit 8104 is connected to the memory 8103, and the interface circuit 8104 may be configured to receive data from the memory 8103 or other devices and send data to the memory 8103 or other devices. For example, the interface circuit 8104 may read data stored in the memory 8103 and send the data to the processor 8101.

The communication device 8100 described in the above embodiments may be a network device or a terminal, but the scope of the communication device 8100 described in the disclosure is not limited thereto, and the structure of the communication device 8100 may not be limited by FIG. 7A. The communication device may be a stand-alone device or a part of a larger device. For example, the communication device may be: (1) a stand-alone integrated circuit (IC), or a chip, or a chip system or subsystem; (2) a set having one or more ICs, and optionally, the above IC set may further include a storage component for storing data and programs; (3) an ASIC, such as a modem; (4) a module that can be embedded in other devices; (5) a receiver, a terminal, an intelligent terminal, a cellular phone, a wireless device, a handset, a mobile unit, a vehicle-mounted device, a network device, a cloud device, an artificial intelligence device, etc.; (6) others.

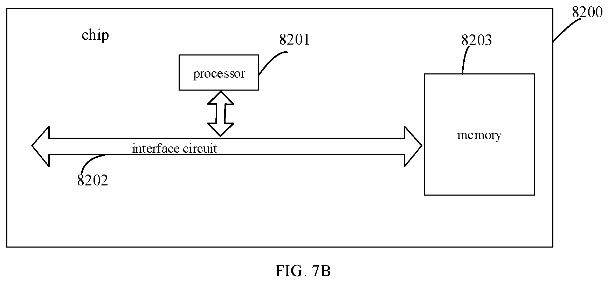

FIG. 7B is a schematic structural diagram of a chip 8200 proposed in an embodiment of the disclosure. For the case where the communication device 8100 may be a chip or a chip system, reference may be made to the schematic structural diagram of the chip 8200 shown in FIG. 7B, but is not limited thereto.

The chip 8200 includes one or more processors 8201, and the chip 8200 is configured to perform any of the above methods.

In some embodiments, the chip 8200 further includes one or more interface circuits 8202. In some embodiments, terms such as interface circuit, interface, and transceiver pin may be replaced with each other. In some embodiments, the chip 8200 further includes one or more memories 8203 for storing data. In some embodiments, all or part of the memory 8203 may be located outside the chip 8200. In some embodiments, the interface circuit 8202 is connected to the memory 8203. The interface circuit 8202 may be configured to receive data from the memory 8203 or other devices, and the interface circuit 8202 may be configured to send data to the memory 8203 or other devices. For example, the interface circuit 8202 may read data stored in the memory 8203 and send the data to the processor 8201.

In some embodiments, the interface circuit 8202 performs at least one of communication steps such as sending and/or receiving in the above methods (for example, step S2101, but not limited thereto). The performance of communication steps such as sending and/or receiving in the above methods by the interface circuit 8202 means, for example: the interface circuit 8202 performs data interaction between the processor 8201, the chip 8200, the memory 8203, or a transceiver device. In some embodiments, the processor 8201 may perform at least one of other steps (for example, step S2102, but not limited thereto).

An embodiment of the disclosure further provides a storage medium having instructions stored thereon, which, when run on the communication device 8100, cause the communication device 8100 to perform any of the above methods. In some embodiments, the storage medium is an electronic storage medium. In some embodiments, the storage medium is a computer-readable storage medium, but is not limited thereto, and may also be a storage medium readable by other devices. In some embodiments, the storage medium may be a non-transitory storage medium, but is not limited thereto, and may also be a transitory storage medium.

An embodiment of the disclosure further provides a program product which, when executed by the communication device 8100, causes the communication device 8100 to perform any of the above methods. In some embodiments, the program product may be a computer program product.

An embodiment of the disclosure further provides a computer program which, when run on a computer, causes the computer to perform any of the above methods.

## Claims

1. A communication method, performed by a first device, comprising:
receiving a first signaling sent by a second device,
wherein the first signaling comprises first information, the first information is information related to a total quantity of time units in a time unit set, the first signaling is configured to instruct the first device to determine a first random number and a first sequence number, and the first sequence number is a sequence number of a time unit for sending the first random number.

2. The communication method according to claim 1, wherein the first signaling further comprises second information,
the first signaling is further configured to instruct the first device to determine a threshold according to at least one of the first information or the second information, the threshold refers to a number of times a second signaling needs to be received before sending the first random number to the second device, and the second signaling is configured to instruct the first device to enter a next sending occasion.

3. The communication method according to claim 2, further comprising:
determining the first random number;
determining the first sequence number according to the first information and the second information;
receiving the second signaling sent by the second device until the number of times the second signaling is received reaches the threshold;
sending the first random number to the second device in a first time unit, wherein the first time unit is a time unit corresponding to the first sequence number in the time unit set; and
receiving a response message sent by the second device, wherein the response message indicates that at least one first device accesses a channel successfully.

4. The communication method according to claim 3, wherein the second signaling comprises an index value related to a total quantity of repeated transmissions of the second signaling,
the first time unit is a time unit corresponding to the first sequence number in a first time unit subset, the time unit set comprises the first time unit subset, and the first time unit subset has a mapping relationship with the index value.

5. The communication method according to claim 4, wherein a channel for sending the first random number has a mapping relationship with the index value.

6. The communication method according to claim 2, further comprising:
determining a second sequence number according to the first signaling, wherein the second sequence number is a sequence number of a time unit among time units for sending the first random number;
determining a quantity of first time units;
determining a third sequence number according to the second sequence number and the quantity of the first time units, wherein the third sequence number is a sequence number of an initial time unit for the first device to send the first random number to the second device; and
determining the first sequence number according to the third sequence number and the quantity of the first time units.

7. The communication method according to claim 6, wherein
the first information is the total quantity of time units or a value obtained by raising 2 to the power of the total quantity of time units, and the second information is a quality factor (Q) value; or
the first information is the total quantity of time units, and the second information is a product of the total quantity of time units and the Q value.

8. The communication method according to claim 6, wherein the first signaling further comprises third information, and the third information indicates at least one of:
an uplink channel or a sidelink channel;
a data rate and a modulation format transmitted on an uplink or a sidelink; or
whether a pilot transmitted on an uplink or a sidelink is an extended pilot.

9. The communication method according to claim 6, wherein the quantity of the first time units is determined according to at least one of:
the quantity of first time units indicated by the second device;
a self-capability of the first device; or
a coverage level of the first device.

10. The communication method according to claim 7, wherein the first information is the total quantity of time units or the value obtained by raising 2 to the power of the total quantity of time units, and the second information is the Q value,
wherein determining the second sequence number according to the first signaling comprises:
determining a third random number according to the first information, wherein a value range of the third random number is determined by the quantity of the first time units and the first information; and
taking the third random number as the second sequence number;
the method further comprises:
determining a second random number according to the second information, and taking the second random number as the threshold.

11. The communication method according to claim 7, wherein the first information is the total quantity of time units, and the second information is the product of the total quantity of time units and the Q value,
wherein determining the second sequence number according to the first signaling comprises:
taking a quotient of the first information and the quantity of the first time units as a first result;
determining a fourth random number according to the second information; and
taking a result obtained by performing a modulo operation on the fourth random number and the first result as the second sequence number.

12. The communication method according to claim 11, further comprising:
taking a quotient of the fourth random number and the first result as the threshold.

13. The communication method according to claim 8, wherein the first information is the total quantity of time units, and the second information is the Q value,
wherein determining the second sequence number according to the first signaling comprises:
determining the second sequence number according to the first information and the third information.

14. The communication method according to claim 13, further comprising:
generating a fifth random number according to the second information, and taking the fifth random number as the threshold.

15. A communication method, performed by a second device, comprising:
sending a first signaling to a first device,
wherein the first signaling comprises first information, the first information is information related to a total quantity of time units in a time unit set, the first signaling is configured to instruct the first device to determine a first random number and a first sequence number, and the first sequence number is a sequence number of a time unit for sending the first random number.

16. The communication method according to claim 15, wherein the first signaling further comprises second information,
the first signaling is further configured to instruct the first device to determine a threshold according to at least one of the first information or the second information, the threshold refers to a number of times a second signaling needs to be received before sending the first random number to the second device, and the second signaling is configured to instruct the first device to enter a next sending occasion.

17. The communication method according to claim 16, further comprising:
sending the second signaling to the first device;
receiving the first random number sent by the first device;
sending a response message to the first device, wherein the response message indicates that the first device accesses a channel successfully.

18. The communication method according to claim 16, wherein
the first information is the total quantity of time units or a value obtained by raising 2 to the power of the total quantity of time units, and the second information is a quality factor (Q) value; or
the first information is the total quantity of time units, and the second information is a product of the total quantity of time units and the Q value.

19. The communication method according to claim 15, wherein the first signaling further comprises third information, and the third information indicates at least one of:
an uplink channel or a sidelink channel;
a data rate and a modulation format transmitted on an uplink or a sidelink; or
whether a pilot transmitted on an uplink or a sidelink is an extended pilot.

20. The communication method according to claim 16, wherein the second signaling comprises an index value related to a total quantity of repeated transmissions of the second signaling.

21. The communication method according to claim 16, wherein the total quantity of time units is predefined by a protocol or determined by a configuration of the second device.

22. The communication method according to claim 17, wherein
a first start time when the second device receives the first random number from an initial first device is later than a first end time when the second device sends the first signaling to a last first device, and a difference between the first start time and the first end time is not less than a first threshold; and
a second end time when the second device receives the first random number from the last first device is earlier than a second start time when the second device sends the response message to the initial first device, and a difference between the second end time and the second start time is not less than a second threshold.

23. A terminal device, serving as a first device, comprising:
a transceiver module, configured to receive a first signaling sent by a network device,
wherein the first signaling comprises first information, the first information is information related to a total quantity of time units in a time unit set, the first signaling is configured to instruct the first device to determine a first random number and a first sequence number, and the first sequence number is a sequence number of a time unit for sending the first random number.

24. A network device, serving as a second device, comprising:
a transceiver module, configured to send a first signaling to at least one terminal device,
wherein the first signaling comprises first information, the first information is information related to a total quantity of time units in a time unit set, the first signaling is configured to instruct the first device to determine a first random number and a first sequence number, and the first sequence number is a sequence number of a time unit for sending the first random number.

25. A communication device, comprising:
one or more processors,
wherein the one or more processors are configured to execute the communication method according to any one of claims 1 to 14.

26. A communication device, comprising:
one or more processors,
wherein the one or more processors are configured to execute the communication method according to any one of claims 15 to 22.

27. A communication system, comprising:
a first device, configured to implement the communication method according to any one of claims 1 to 14; and
a second device, configured to implement the communication method according to any one of claims 15 to 22.

28. A storage medium storing instructions, wherein when the instructions are run on a communication device, the communication device is caused to execute the communication method according to any one of claims 1 to 14 and claims 15 to 22.
